## Europäisches Patentamt
## European Patent Office
## Office européen des brevets

(19)

(11) Numéro de publication: **0 270 444**
**B1**

(12)
# FASCICULE DE BREVET EUROPEEN

(45) Date de publication du fascicule du brevet:
24.01.90

(51) Int. Cl.⁴: **F02C 7/277,** F01D 25/18, F02C 7/06

(21) Numéro de dépôt: 87402607.3

(22) Date de dépôt: 19.11.87

(54) Système de lubrification pour démarreur de turbomachine.

(30) Priorité: 20.11.86 FR 8616136

(43) Date de publication de la demande:
08.06.88 Bulletin 88/23

(45) Mention de la délivrance du brevet:
24.01.90 Bulletin 90/4

(84) Etats contractants désignés:
DE FR GB IT

(56) Documents cités:
DE-C- 221 450
GB-A- 2 144 804
US-A- 2 751 749
US-A- 3 036 659
US-A- 3 499 503

(73) Titulaire: SOCIETE NATIONALE D'ETUDE ET DE
CONSTRUCTION DE MOTEURS D'AVIATION,
"S.N.E.C.M.A.", 2, boulevard du Général Martial Valin,
F-75015 Paris(FR)

(72) Inventeur: Mouton, Pierre Charles, 19, rue de la Mare aux
Moines, F-91350 Grigny(FR)

(74) Mandataire: Moinat, François et al, S.N.E.C.M.A. Service
des Brevets Boîte Postale 81, F-91003 Evry Cédex(FR)

## Description

La présente invention concerne un système de lubrification pour un démarreur de turbomachine.

De manière habituelle un démarreur de turbomachine est intégré dans un ensemble de chaîne cinématique adjoint à la turbomachine et comportant, en outre, un boîtier de prise de mouvement, un arbre de transmission et un boîtier de commande d'accessoires à partir duquel sont entraînés notamment une pompe à huile, une pompe à carburant, une pompe hydraulique et dans le cas d'une application aéronautique, divers accessoires d'avion. Lors du démarrage de la turbomachine, le démarreur entraîne en rotation au moins un corps tournant de la turbomachine par l'intermédiaire du boîtier de prise de mouvement et de arbre de transmission. Après mise en route par le démarreur, la chaîne cinématique est entraînée par la turbomachine.

Le démarreur est un équipement fragile particulièrement en cas de perte de lubrification, et ses détériorations peuvent se propager à toute la chaîne cinématique.

Afin d'éviter de telles conséquences diverses solutions techniques ont été apportées aux problèmes posés. Entre autres, un désaccouplage a été introduit entre le démarreur et la ligne d'arbres de transmission. Cette solution est illustrée par exemple par EP-A-0102 859, par EP-A-0059 627 ou encore par FR-A-2 020 349 et FR 2 414 146. Une des origines de la panne par rupture du dispositif d'accouplement entre le démarreur et la turbomachine a été localisée dans des défauts de la lubrification survenant au niveau du démarreur.

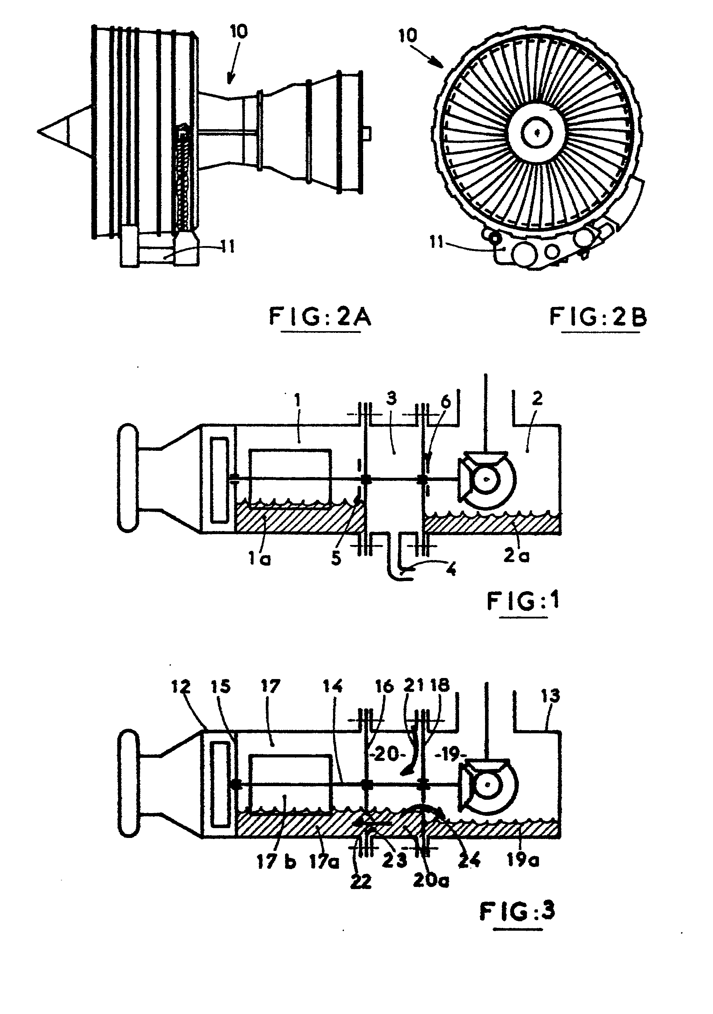

Un système de lubrification couramment utilisé est représenté schématiquement à la figure 1 des dessins annexés. Le principe de ce système consiste à doter le démarreur d'un système de lubrification totalement indépendant du système de lubrification de la turbomachine. Pour le réaliser, l'enceinte 1 du démarreur est munie d'un bain dormant 1a d'huile en quantité limitée, la lubrification obtenue étant du type à barbotage. Le boîtier de prise de mouvement est lubrifié à partir d'huile du circuit de lubrification de la turbomachine et forme une enceinte 2 indépendante comportant un bain d'huile 2a. Entre ces deux enceintes 1 et 2, est ménagée une cavité 3 d'interface sèche et drainée en 4. Des joints tournants 5 et 6 assurent l'étanchéité entre les trois enceintes respectives. Cette solution ne prévoit aucune surveillance continue et en cas d'anomalie de remplissage ou de fuite accidentelle d'huile les défauts de lubrification du démarreur occasionnent des ruptures et entrainent les conséquences dommageables rappelées ci-dessus.

Une autre solution antérieure consiste à assurer une lubrification du démarreur par circulation continue d'huile en provenance du circuit d'alimentation en huile de la turbomachine. Dans ce cas le retour d'huile s'effectue également vers le système de lubrification de la turbomachine, ce qui présente l'inconvénient d'une pollution de l'huile de la turbomachine par les contaminations venant du démarreur. Une solution de ce genre est par exemple illustrée par GB-A-2 144 804. Un dispositif de filtration peut être adjoint, ce qui impose toutefois de prévoir une dérivation en cas de colmatage du filtre et n'élimine pas par conséquent les risques de contamination et pollution de l'huile de la turbomachine.

L'invention vise à éviter les inconvénients que n'élimine pas l'application de l'un ou l'autre des types de solutions connues et à garantir la lubrification d'un démarreur de turbomachine tout en assurant une protection parfaite de la turbomachine contre les risques de pollution de son circuit d'huile par des contaminations provenant du démarreur.

Ces buts sont atteints par un système de lubrification du démarreur conforme à l'invention, du genre comportant un bain d'huile de barbotage. Ce système est caractérisé en ce que l'enceinte de démarreur contenant ledit bain d'huile communique avec une enceinte intermédiaire non polluante au moyen d'au moins un trou percé dans la cloison de séparation entre ces deux enceintes et équipé d'une crépine de filtration et en ce que ladite enceinte intermédiaire est reliée au circuit de lubrification de la turbomachine qui l'alimente en huile propre et communique également avec une enceinte de la turbomachine par un déversoir qui déverse le trop-plein d'huile propre de ladite enceinte intermédiaire dans ladite enceinte de turbomachine.

Avantageusement l'enceinte de turbomachine est constituée par un carter de boîtier de prise de mouvement de la chaîne cinématique de la turbomachine et l'enceinte intermédiaire est constituée par une cavité d'interface entre le démarreur et le boîtier de prise de mouvement.

L'enceinte de démarreur, normalement remplie d'huile, est, en cas de besoin, compensée en huile propre à partir de l'enceinte intermédiaire, cette huile traversant pour cela la crépine dans le sens, allant de l'enceinte intermédiaire vers l'enceinte de démarreur.

Les principaux avantages de l'invention résultant de ces caractéristiques sont qu'une bonne lubrification permanente du démarreur est assurée puisqu'elle est garantie par le système de lubrification de la turbomachine et par la surveillance continue de celui-ci.

En même temps la turbomachine est rendue pratiquement indépendante d'une contamination venant du démarreur et bénéficie de l'amélioration de la fiabilité de celui-ci. Ce résultat permet de classer le démarreur dans une catégorie d'équipements qui peuvent être remplacés sur un avion sans dépose du moteur, ce qui est avantageux du point de vue de la maintenance.

D'autres caractéristiques et avantages de l'invention ressortent mieux de la description qui va suivre d'un mode de réalisation d'un système de lubrification pour démarreur conforme à l'invention, en référence aux dessins annexés sur lesquels :

- la figure 1 déjà décrite auparavant représente un système antérieur de lubrification d'un démarreur de turbomachine de type connu, dans une vue schématique de principe ;
- les figures 2A et 2B montrent deux vues schématiques de turbomachine en élévation et de l'avant indiquant l'emplacement de l'ensemble de chaîne cinématique de la prise de mouvement ;
- la figure 3 représente une vue schématique de principe, analogue à la figure 1, d'un système de lubrification pour démarreur de turbomachine, conforme à l'invention ;
- la figure 4 représente une vue en coupe longitudinale par un plan passant par les axes de rotation du démarreur et de l'arbre de transmission montrant un système de lubrification réalisé selon le principe montré à la figure 3, dans un mode de réalisation de l'invention.

Les figures 2A et 2B représentent une turbomachine du genre turbosoufflante 10 qui comporte un ensemble 11 comportant un boîtier de commande d'accessoires, un boîtier de prise de mouvement, un démarreur et leurs arbres de transmission. Le démarreur 12 et le boîtier de prise de mouvement 13 sont schématiquement représentés à la figure 3. Une ligne de transmission 14 traverse les cloisons 15 et 16 qui délimitent une enceinte 17 de démarreur et la cloison 18 qui délimite l'enceinte 19 de boîtier de prise de mouvement. Entre lesdites cloisons 16 et 18 est ménagée une enceinte intermédiaire 20 qui constitue une cavité d'interface entre le démarreur et le boîtier de prise de mouvement de la turbomachine. La cavité d'interface 20 comporte un bain d'huile 20a directement alimenté à partir d'une arrivée raccordée au circuit de distribution d'huile de la turbomachine et représentée par la flèche 21. La cloison 16 séparant l'enceinte de démarreur 17 de la cavité d'interface 20 comporte au niveau du bain d'huile 20a un passage 22 protégé par une crépine de filtration 23 à travers laquelle s'établit la communication entre le bain d'huile 20a et un bain d'huile 17a formé dans l'enceinte 17 de démarreur et qui se trouve ainsi relié en permanence au système de lubrification de la turbomachine. Ce bain d'huile 17a assure la lubrification permanente du démarreur par barbotage dans l'huile d'au moins une roue d'engrenage, telle que 17b.
Entre la cavité d'interface 20 et l'enceinte 17 de démarreur, l'huile peut circuler ainsi à travers la crépine de filtration 23 et, en particulier, en cas de besoin, dans le sens allant de la cavité 20 vers le démarreur. En cas de contamination importante dans le démarreur, la crépine de filtration joue sa fonction de protection et n'encourt pas de risques de colmatage. La circulation d'huile reste donc assurée et la cavité d'interface 20 ne risque pas d'être contaminée.
La cloison 18 de séparation entre la cavité d'interface 20 et l'enceinte 19 du boîtier de prise de mouvement présente également un passage formant déversoir 24 qui permet le passage continu du trop-plein d'huile propre du bain 20a vers le bain 19a qui est formé dans l'enceinte 19 de boîtier de prise de mouvement. Par les moyens qui viennent d'être décrits, l'huile dans les bains 20a et 19a respectivement formés dans la cavité d'interface 20 et l'enceinte 19 de boîtier de prise de mouvement, qui entre dans le circuit de circulation d'huile de la turbomachine, est ainsi maintenue constamment propre et protégée de toute pollution qui pourrait provenir du démarreur.

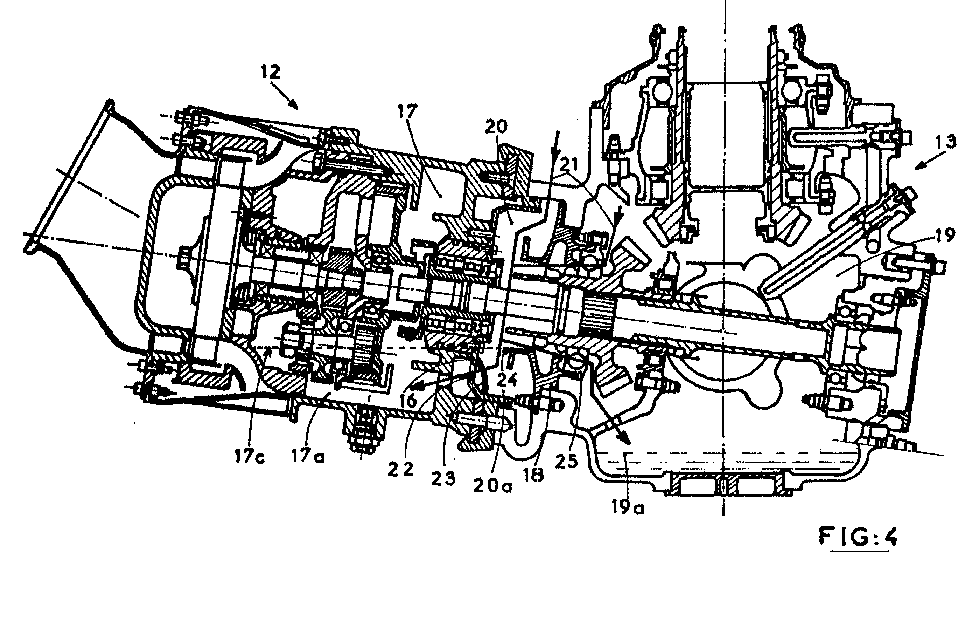

On retrouve dans l'exemple de réalisation représenté à la figure 4 les divers éléments qui ont été décrits en référence à la figure 3 : un démarreur 12, un boîtier 13 de prise de mouvement avec leurs enceintes respectives 17 et 19 ; une enceinte intermédiaire 20 et ses cloisons 16 et 18 ; sur la cloison 16, le passage 22 et le filtre associé 23 ; sur la cloison 18, le déversoir 24 ; l'arrivée 21 d'huile de turbomachine qui peut venir par une arrivée directe dans l'enceinte 20 et/ ou au travers d'un roulement 25. On retrouve également les bains d'huile 17a du démarreur, 20a de l'enceinte intermédiaire et 19a du boîtier de prise de mouvement. Il résulte de ces dispositions que le niveau d'huile dans l'enceinte du démarreur, figuré par la ligne 17c sur la figure 4, est fixé par la hauteur du bord de déversoir 24, la mise à niveau entre les bains 17a et 20a se faisant au travers du filtre 23.

**Revendications**

1. - Système de lubrification pour démarreur de turbomachine du genre comportant un bain d'huile de barbotage caractérisé en ce que l'enceinte (17) de démarreur contenant ledit bain d'huile communique avec une enceinte intermédiaire (20) non polluante au moyen d'au moins un trou (22) percé dans la cloison de séparation (16) entre ces deux enceintes et équipé d'une crépine de filtration (23) et en ce que ladite enceinte intermédiaire (20) est reliée au circuit de lubrification (21) de la turbomachine qui l'alimente en huile propre et communique également avec une enceinte (19) de la turbomachine par un déversoir (24) qui déverse le trop-plein d'huile propre de ladite enceinte intermédiaire (20) dans ladite enceinte (19) de turbomachine.

2. - Système de lubrification selon la revendication 1 caractérisé en ce que l'enceinte (19) de turbomachine est constituée par un carter de boîtier de prise de mouvement (13) de la chaîne cinématique de la turbomachine.

3. - Système de lubrification selon l'une des revendications 1 ou 2 caractérisé en ce que l'enceinte intermédiaire (20) est constituée par une cavité d'interface entre le démarreur (12) d'une part et le boîtier de prise de mouvement (13) de la turbomachine d'autre part.

4. - Système de lubrification selon l'une quelconque des revendications 1 à 3 caractérisé en ce que l'huile propre traverse ladite crépine de filtration (23), de l'enceinte intermédiaire (20) vers l'enceinte (17) de démarreur.

**Patentansprüche**

1. Schmiervorrichtung für eine Anlaßvorrichtung einer Turbomaschine mit einem Ölbad zum Spritzschmieren, dadurch gekennzeichnet, daß der das Ölbad enthaltende Behälterraum (17) mit einem nicht verschmutzenden mittleren Behälterraum (20) über wenigstens ein mit einer Filteranordnung (23) ausgestattetes Loch (22) in Verbindung steht, das in der Trennwand zwischen dem das Ölbad enthaltenden Behälterraum (17) und dem mittleren Behälterraum (20) angebracht ist, und daß dieser mittlere Behälterraum (20) mit dem Schmierkreis der Turbomaschine zur Zuführung von sauberem Öl verbunden ist und außerdem über einen Oberlauf (24) mit einem Behälterraum (19) der Turbomaschine in Verbindung steht, wobei dieser Überlauf den Überschuß an sauberem Öl aus dem mittleren Behälterraum (20) in den den Behälterraum (19) der Turbomaschine ableitet.

2. Schmiervorrichtung nach Anspruch 1, dadurch gekennzeichnet, daß der Behälterraum (19) der Turbomaschine aus dem Gehäuse eines Getriebekastens (13) der kinematischen Kette der Turbomaschine besteht.

3. Schmiervorrichtung nach einem der Ansprüche 1 oder 2, dadurch gekennzeichnet, daß der mittlere Behälterraum (20) von einem Hohlraum gebildet ist, der eine Schnittstelle zwischen der Anlaßvorrichtung (12) einerseits und dem Getriebekasten (13) andererseits bildet.

4. Schmiervorrichtung nach einem der Ansprüche 1 bis 3, dadurch gekennzeichnet, daß das saubere Öl die genannte Filteranordnung (23) von dem mittleren Behälterraum (20) in Richtung auf den Behälterraum (17) der Anlaßvorrichtung durchdringt.

## Claims

1. A lubrication system for the starter of a gas turbine engine, of the type comprising an oil-splash bath characterised in that the starter compartment (17) containing the said oil bath communicates with an intermediate non-polluting compartment (20) by means of a hole (22) drilled in the dividing wall (16) between these two compartments, fitted with a filtration strainer (23), and in that the said intermediate compartment (20) is connected to the lubrication system (21) of the gas turbine which supplies it with clean oil, and also communicates with a compartment (19) of the gas turbine via an overflow (24) which discharges the surplus of cleans oil in the said intermediate compartment back into the said compartment (19) in the gas turbine.

2. A system of lubrication in accordance with Claim 1 characterised in that the compartment (19) of the gas turbine is constituted by the casing of the main drive gearing (13) of the kinematic chain of the gas turbine.

3. A system of lubrication in accordance with one or other of the Claims 1 and 2 characterised in that the intermediate compartment (20) is constituted by the interface chamber between the starter (12), on the one hand, and the main drive gearbox casing (13) of the gas turbine, on the other.

4. A system of lubrication in accordance with any of the above Claims 1 to 3 characterised in that the clean oil passes through the said filtration strainer (23), from the intermediate compartment (20) towards the starter compartment (17).

FIG:2A

FIG:2B

FIG:1

FIG:3

FIG:4